# EUROPEAN PATENT SPECIFICATION

(11) **EP 3 852 540 B1**
(45) Date of publication and mention of the grant of the patent: **10.01.2024**
(21) Application number: 19786530.6
(22) Date of filing: 08.10.2019
(51) Int. Cl.: A23B 7/144, A23B 7/148, A23B 7/154, A23B 7/14

(54) **METHOD FOR THE STORAGE OF POTATO COMPRISING TREATMENT BY ETHYLENE AND 1-METHYLCYCLOPROPENE**
METHODE ZUR LAGERUNG VON KARTOFFELN, WOBEI DIESE DURCH ETHYLEN UND 1-METHYLCYCLOPROPEN BEHANDELT WERDEN
METHODE DE STOCKAGE DE POMMES DE TERRE INCLUANT LE TRAITEMENT A L'ETHYLENE ET LE 1-METHYLCYCLOPROPENE

(30) Priority: 16.11.2018 GB 201818727
(43) Date of publication of application: 28.07.2021
(60) Divisional application: 22204191.5
(73) Proprietor: Frito-Lay Trading Company GmbH, 3011 Bern (CH)
(72) Inventor: CHOPE, Gemma A., Leicester LE4 1ET (GB); MCWILLIAM, Simon C., Leicester LE4 1ET (GB); TERRY, Leon A., Cranfield University Bedfordshire MK43 0AL (GB); COOLS, Katherine, Binfeld RG42 5LG (GB); LANDAHL, Sandra, Cranfield University Bedfordshire MK43 0AL (GB); TOSETTI, Roberta, Cranfield University Bedfordshire MK43 0AL (GB)
(74) Representative: Page White Farrer
(86) International application number: PCT/EP2019/077170
(87) International publication number: WO 2020/099029

(56) References cited:
- CN-A- 105 767 851
- ROBERT K. PRANGE ET AL: "Effects of ethylene and 1-methylcyclopropene on potato tuber sprout control and fry color", AMERICAN JOURNAL OF POTATO RESEARCH, vol. 82, no. 2, 1 March 2005 (2005-03-01), pages 123-128, XP055661633, US ISSN: 1099-209X, DOI: 10.1007/BF02853649 cited in the application
- FOUKARAKI SOFIA G ET AL: "Differential effect of ethylene supplementation and inhibition on abscisic acid metabolism of potato (Solanum tuberosumL.) tubers during storage", POSTHARVEST BIOLOGY AND TECHNOLOGY, ELSEVIER, NL, vol. 112, 28 October 2015 (2015-10-28), pages 87-94, XP029301512, ISSN: 0925-5214, DOI: 10.1016/J.POSTHARVBIO.2015.10.002 cited in the application
- S. G. FOUKARAKI ET AL: "Effect of the transition between ethylene and air storage on post-harvest quality in six UK-grown potato cultivars", JOURNAL OF HORTICULTURAL SCIENCE AND BIOTECHNOLOGY, vol. 89, no. 6, 7 January 2014 (2014-01-07), pages 599-606, XP055661637, GB ISSN: 1462-0316, DOI: 10.1080/14620316.2014.11513126 cited in the application
- FOUKARAKI SOFIA G ET AL: "Impact of ethylene and 1-MCP on sprouting and sugar accumulation in stored potatoes", POSTHARVEST BIOLOGY AND TECHNOLOGY, ELSEVIER, NL, vol. 114, 21 December 2015 (2015-12-21), pages 95-103, XP029401771, ISSN: 0925-5214, DOI: 10.1016/J.POSTHARVBIO.2015.11.013 cited in the application
- Chapter V: "Effect of 1-MCP and ethylene treatments on the postharvest quality of four UK-grown potato cultivars" In: FOUKARAKI GEORGIOU, Sofia: "Storage of Potatoes: effects of ethylene and 1-MCP on potato tuber quality and biochemistry (Ph D thesis)", 1 July 2012 (2012-07-01), Cranfield University, UK, XP055661750, pages 96-133, abstract paragraph [5.3.1]
- G Harper ET AL: "In-store control of sprouting and processing quality using CIPC and ethylene AHDB -Potato Council Sutton Bridge Crop Storage Research Contents", , 1 January 2015 (2015-01-01), pages 2-25, XP055661745, Agriculture and Horticulture Development Board (UK) Retrieved from the Internet: URL:https://potatoes.ahdb.org.uk/sites/def ault/files/publication_upload/R441%20Final %20Report_as%20published.pdf [retrieved on 2020-01-24]

## Description

The present invention relates to a method of storing potatoes.

Potatoes can be stored for up to a year but storability is mainly governed by potato cultivar and storage regime. There are two phases which dictate the storability of potato; the period of physiological dormancy after harvest (endodormancy) and the period of sprout suppression (ecodormancy).

Dormancy has been defined as "the temporary suspension of visible growth of any plant structure containing a meristem" (Lang et al, 1987).

In this specification, endodormancy refers to the period after tuber initiation, extending for an indeterminate period after harvest, where tuber meristems (eyes) do not sprout and are under the control of physiological factors; and ecodormancy describes any period after endodormancy where the tubers are no longer physiologically dormant but where external environmental factors inhibit growth of the meristem, thereby suppressing sprout growth. The term "eye movement" refers to the early visible stages of growth of tuber meristems which if not suppressed will go on to form sprouts, and in this specification "eye movement" as an indicator of dormancy break means that the tuber meristems have grown to a length of at least 1 mm.

There are several technologies which are employed to initiate and/or extend the ecodormancy of potatoes. For potatoes which are for domestic or table use, tubers are typically stored at low temperature, and optionally in an ethylene containing environment. Such storage conditions may increase the sugar content of the potatoes. For potatoes which are intended to be processed, it is generally important to maintain a low sugar (glucose, fructose and sucrose) content during the storage period, and hence higher storage temperatures in combination with a chemical sprout suppressant are generally employed. As a rule, higher storage temperatures may be preferred to avoid cold-induced sweetening, since such cold-induced sweeting would result in an increased sugar content. For potatoes that are to be processed, for example by frying to form potato chips, or potato crisps, an increased sugar content can lead to undesired excessive browning during frying, and can potentially increase the acrylamide content of the resultant fried product, which is not desired since acrylamide in the diet causes cancer in animals, and is believed to have the potential to cause cancer in humans as well.

The most commonly used chemical sprout suppressant is chlorpropham (CIPC). However the presence of detectable residues down the supply chain has led to concerns over possible withdrawal or restrictions of that chemical sprout suppressant. It is recognized that without a viable alternative to CIPC future long-term and year round potato supplies for processing will be threatened.

It has previously been proposed to use chemical treatments to modify the conditions under which the potatoes are stored.

The present inventors have been authors on a number of papers that disclose studies which have investigated the effect of chemical treatments on potato tuber physiology during storage to achieve both sprout suppression and lower concentrations of reducing sugars throughout the storage period.

In early work, one of the inventors, S. G. Foukaraki, carried out such investigations in their PhD Thesis published on 1 July 2012 by Cranfield University, UK (XP055661750) entitled "Storage of Potatoes: effects of ethylene and 1-MCP on potato tuber quality and biochemistry", in particular in Chapter Five (pages 96-133), entitled "Effect of 1-MCP and ethylene treatments on the post-harvest quality of four UK-grown potato cultivars".

One paper is entitled "Effect of the transition between ethylene and air storage on postharvest quality in six UK-grown potato cultivars", by S. G. Foukaraki, K. Cools, G. A. Chope and L. A. Terry, in the Journal of Horticultural Science & Biotechnology (2014) 89 (6) 599-606. That paper discloses that continuous exposure to ethylene during storage can prolong the storage-life of potato tubers by suppressing sprouting. Six different UK potato cultivars, that had not been pretreated with CIPC, were stored at 6°C for 30 weeks under continuous 10 µL/L ethylene treatment, under continuous air, or transferred from air to 10 µL/L ethylene at the first indication of sprouting, or *vice versa.* Fructose, glucose, and sucrose concentrations were determined in samples of tuber flesh and in potato skins. Texture and sprouting were measured after 30 weeks in cold storage. Ethylene applied at the first indication of sprouting for some cultivars was as effective at suppressing further sprouting as observed when ethylene was applied continuously and resulted in no additional ethylene-induced sugar accumulation. However, the reducing sugar concentrations, i.e. of fructose, and glucose, were still undesirably rather high for many potato processing applications, for example the manufacture of fried potato chips.

Another paper is entitled "Differential effect of ethylene supplementation and inhibition on abscisic acid metabolism of potato (Solanum tuberosum L.) tubers during storage", by Sofia G. Foukaraki, Katherine Cools, and Leon A. Terry, in Postharvest Biology and Technology 112 (2016) 87-94. That paper discloses that two potato cultivars 'Estima' and 'Marfona' were treated with air or continuous ethylene (10 µL/L), transferred from air to ethylene or vice versa at first indication of sprouting (10% peeping of the control tubers), over three seasons. Prior to any treatment and storage, the tubers underwent a controlled cooling regime from 15°C (arrival temperature), at a rate of 0.5°C reduction per day at ambient relative humidity (RH), to a holding temperature of 6°C, in order to minimize chilling stress and allow time for wound healing; such controlled chilling being known in the art as "pulldown". The ethylene binding inhibitor, 1-methylcyclopropene (1-MCP), was applied (1 µL/L for 24 h) either after pulldown and/or at first indication of sprouting during storage. Tubers were stored at 6°C for 30 weeks and assessed for sprout length and number, and non-structural carbohydrate content. Subsequent to the 1-MCP treatment, ethylene applied after pulldown or at the first indication of sprouting reduced sprout growth significantly for both cultivars while ethylene-induced sugar accumulation was prevented by 1-MCP application prior to ethylene storage. Multiple applications of 1-MCP showed no additional benefit to ethylene induced sugar accumulation. However, the reducing sugar concentrations, i.e. of fructose and glucose, were still undesirably rather high for many potato processing applications, for example the manufacture of fried potato chips.

A further paper is entitled "Impact of ethylene and 1-MCP on sprouting and sugar accumulation in stored potatoes", by Sofia G. Foukaraki, Katherine Cools, Gemma A. Chope and Leon A. Terry, in Postharvest Biology and Technology 114 (2016) 95-103. That paper discloses that continuous exposure to ethylene during storage prolongs storage life of potatoes by suppressing sprouting. Potato cultivars Saturna and Russet Burbank, which are processing cultivars, were stored at 6°C under four ethylene treatments (*viz.* continuous ethylene (10 µL/L), continuous air, transfer from air to ethylene after first indication of sprouting and *vice versa*) for 30 weeks in 2008-2009 (Year 1). In Year 2 (2009-2010), tubers were stored under the same treatments and duration as in Year 1, with the addition of 1-MCP (1 µL/L) applied for 24 h at harvest or at first indication of peeping. Fructose, glucose and sucrose were determined in potato flesh of all cultivars as ethylene had been reported to have some negative effects on non-structural carbohydrate metabolism. Sprouting was also measured at the end of the experiment. Ethylene applied after first indication of sprouting was as effective at suppressing sprouting for cv. Russet Burbank as when applied continuously; the implications of which are that the cost of ethylene application in store rooms could be reduced by manipulating timing of continuous application. In addition, application of ethylene after the first indication of sprouting had little to no effect on tuber sugar accumulation compared with continuous ethylene application from harvest. However, again the absolute concentrations of reducing sugars, i.e. of fructose and glucose, were still undesirably rather high for many potato processing applications, for example the manufacture of fried potato chips.

A conference presentation entitled "Ethylene for processing", by Richard Colgan, Natural Resources Institute, University of Greenwich, London, UK, presented at the Potato Council International Storage Conference, 13 February 2014 discloses experiments to develop sprout control strategies using a combination of ethylene and 1-MCP. The treatment was the combination of ethylene+1-MCP for a period of 6 months. The treatment comprised the combination of ethylene at 10 µL/L and 1-MCP at 625 nL/L applied on arrival at the crop intake temp. There was no disclosure of any benefit of the use of 1-MCP+ethylene on reducing sugars.

A report published in 2018 by The Potato Council, The Agriculture and Horticulture Development Board, entitled "Use of ethylene and CIPC on processing varieties of potato 2013-2016", Ref: R464, AHDB, Sutton Bridge Crop Storage Research, East Bank, Sutton Bridge, Spalding, Lincs., PE12 9YD, UK, by Authors: G Harper and G. Stroud includes discussions of various prior research and publications. This report references an earlier publication in 2013 by Colgan R., Harper G., Taylor M., Bryan G. and Rees D. entitled "Reducing energy usage and wastage by improving ethylene control of potato sprouting". Defra LINK project report ref. LK09127. The report includes an annex which contains a table from Colgan et al., (2013) which relates to the use of 1-MCP and ethylene. There is no evidence in Annex Table 1 to suggest that ethylene+1-MCP reduces sprout growth compared with continuous ethylene, and the table suggests that there is no benefit of multiple 1-MCP applications (up to 3 applications) on sprout growth.

A literature review published in 2015 by The Potato Council, The Agriculture and Horticulture Development Board, entitled "1-Methylcyclopropene: a review of its use on potato tubers", AHDB, Sutton Bridge Crop Storage Research, East Bank, Sutton Bridge, Spalding, Lincs., PE12 9YD, UK, by Author G Harper includes discussions of the pre-2015 Foukaraki and Colgan publications discussed above concerning 1-Methylcyclopropene and its use on potato tubers.

A report published in 2014 by The Potato Council, The Agriculture and Horticulture Development Board, entitled "Reducing energy usage and wastage by improving ethylene control of potato sprouting", Ref: LK09127/R426, AHDB, Sutton Bridge Crop Storage Research, East Bank, Sutton Bridge, Spalding, Lincs., PE12 9YD, UK, by Authors Richard Colgan, Glyn Harper, Mark Taylor, Glenn Bryan and Debbie Rees, discusses the use of ethylene and 1-MCP. Multiple 1-MCP applications were used; at arrival, at 2 months storage and 4 months storage with or without continuous ethylene, at a concentration of 10 µL/L, from pulldown. In one experiment, it was found that 1-MCP had no additive effect on sprout suppression of ethylene, and reducing sugar results were highly variable with some cultivars showing an increase in sugars in response to 1-MCP and ethylene. The results state that `1-MCP provided no significant additional effect in terms of sprouting', and that `ethylene+1-MCP response in terms of sprout suppression and sugar accumulation was not universal to all varieties tested'. Using this test protocol, it is disclosed that 1-MCP helped to reduce ethylene induced sugar accumulation in two cultivars, but in another experiment 1-MCP had no effect on sprouting, and 1-MCP appeared to have only a shortterm effect (up to 2 months) on ethylene induced fry colour in some cultivars.

A report published in 2015 by The Potato Council, The Agriculture and Horticulture Development Board, entitled "In-store control of sprouting and processing quality using CIPC and ethylene", Ref 441, AHDB, Sutton Bridge Crop Storage Research, East Bank, Sutton Bridge, Spalding, Lincs., PE12 9YD, UK, by Authors G Harper and A. Jina, includes a table from the previous publication in this report detailing the sprout length and fry colour of ethylene, 1-MCP and ethylene and multiple 1-MCP and ethylene treated tubers.

A further paper is entitled "Effects of ethylene and 1-methylcyclopropene on potato tuber sprout control and fry color" Robert K. Prange, Barbara J. Daniels-Lake, Jin-Cheol Jeong and Michael Binns, published in the American Journal of Potato Research, March 2005, Volume 82, Issue 2, pp 123-128. Potato tubers of cultivars 'Shepody' and `Russet Burbank' were treated by: Air (control), Air + 1-MCP (1 (µL.L⁻¹ for 48 h), isopropyl N (3-chlorophenyl) carbamate (chloropropham; CIPC; 1% a.i. [v/v]); continuous ethylene (4 µL.L⁻¹) in air; continuous ethylene pre-treated with 1-MCP once; continuous ethylene pre-treated with 1-MCP and repeated monthly; and continuous ethylene pre-treated with 1-MCP and repeated bi-monthly. Treatment started after suberization and cooling to 9°C, and samples were evaluated at 3-wk (year 1) or 4-wk (years 2 and 3) intervals thereafter until April (Shepody) or June (Russet Burbank). CIPC was applied after suberization (wound healing) and cooling were completed and 1-MCP treatment, for a period of 48 hours, was conducted immediately after CIPC application. Ethylene treatment commenced immediately after 1-MCP treatment, and was continuous thereafter until the end of the trial. Single or multiple additions of 1-MCP to the ethylene treatment did not affect the ethylene control of sprouting. It was concluded that 1-MCP can be used to control fry color darkening induced by ethylene without blocking ethylene control of tuber sprouting. No effect on reducing sugars was analyzed or disclosed.

CN-A-105767851 discloses a method for reducing acrylamide contents in oil-fried potato chips, comprising containing the potato tubers and a 1-methylcyclopropene solid slow-release agent in a sealed device; and performing a fumigation treatment on the potato tubers, especially on the potato tubers after bud-inhibiting ethylene treatments.

Currently, there exists a need in the art for a potato storage regime which can reduce or avoid the use of CIPC or other applied chemical sprout suppressants which may leave residues on the potatoes, and which additionally can exhibit the combination of sprout suppression and maintenance of low sugars (fructose, glucose and sucrose). A potato storage protocol exhibiting the combination of sprout suppression and maintenance of low sugars in the stored potatoes coupled with reduced or no use of applied chemical sprout suppressants would be a major advance for the potato industry and it is an aim of this invention to provide such a potato storage method.

Despite the extensive research, as summarised above, into the use of various chemical sprout suppressants for use on potato tubers, such as CIPC, ethylene and 1-MCP and associated treatment protocols, there is nevertheless still a need in the art for an effective sprout suppressant treatment protocol which can provide effective control of reducing sugars as well as sprout suppression in potato tubers in a reliable, cost effective storage method that can be readily and commercially implemented in the potato storage industry.

It is accordingly an aim of this invention to provide a method of storing potatoes which at least partially overcomes at least some of these significant disadvantages of the existing potato storage methods and protocols currently used in the potato industry.

The present invention provides a method of storing potatoes, the method comprising the steps of:
i. providing a plurality of dormant potatoes, wherein the potatoes have been cured after harvesting;
ii. in a first treatment step, treating the potatoes with 1-methylcyclopropene, the treatment comprising exposing the potatoes, which are at a first treatment temperature within the range of from 10 to 30°C, to 1-methylcyclopropene;
iii. storing the potatoes at a second storage temperature within the range of from 4 to 15°C; and
iv. in a subsequent second treatment step during the storing step iii, treating the potatoes with ethylene, the treatment comprising exposing the potatoes, which are at the second storage temperature, to ethylene.

In this specification, where it is disclosed that the potatoes are stored at a "storage temperature", since potatoes are stored for a significant period, measured in at least days but more typically weeks or months, this means that the potatoes themselves attain a substantially similar temperature as the "storage temperature" - in other words, the "storage temperature" is not merely the temperature within the potato store but is also substantially the temperature of the potato within the store. Correspondingly, in this specification, where it is disclosed that the potatoes are treated by a treatment comprising exposing the potatoes at a treatment temperature, again this means that the potatoes themselves are at substantially the same temperature as the "treatment temperature" - in other words, the "treatment temperature" is not merely the temperature of the environment during the treatment but is also substantially the temperature of the potato during the treatment.

When control potatoes are employed, the control potatoes are preferably the same cultivar as the stored potatoes (for example, both the stored and control potatoes may be of the potato cultivar Saturna).

However, the control potatoes may comprise a plurality of potato cultivars when the stored potatoes in a common storage facility correspondingly comprise a plurality of potato cultivars, and dormancy break, i.e. eye movement and therefore the trigger for application of ethylene, may optionally be based on the first cultivar, within the plurality of potato cultivars, to exhibit eye movement and thereby break dormancy. For example, if the first cultivar in plural cultivars of control potatoes to break dormancy was Saturna, then Saturna and any other cultivar within that store would be treated with ethylene from then onwards irrespective of dormancy break timing of the other control cultivars in the store.

In addition, if the stored potatoes have been treated with CIPC, then the control potatoes have also preferably been treated with CIPC. Typically, the CIPC doses for the stored and control potatoes are substantially equivalent; however, in some embodiments the CIPC dose applied to the control potatoes may be slightly lower than for the stored potatoes, with the result that the dormancy break may be likely to occur earlier in the control potatoes than in the stored potatoes, thereby giving a potentially advanced indicator, with a small safety margin of time, before dormancy break in the stored potatoes.

In practice, the stored potatoes are stored in a large storage facility and the CIPC is delivered via air flow from a plenum to provide a CIPC-containing atmosphere to which the stored potatoes are exposed. In contrast, the control potatoes may be stored in a smaller facility, and typically in individual containers such as paper sacks, in which case the control potatoes may receive a lower dose of CIPC, the dose being expressed as weight of CIPC/weight of stored potatoes, because the individual containers may provide some reduction of the CIPC concentration to which the control potatoes are exposed, since the containers may have the effect of providing some protection of the tubers from CIPC.

Also, the control potatoes are stored in a particular atmosphere, atmospheric air, which is substantially the same as the storage atmosphere for the stored potatoes apart from the addition of the actives 1-methylcyclopropene and ethylene to the storage atmosphere for the stored potatoes. However, the control atmosphere may not be identical to the atmosphere under which, in any particular storage step, the potato crop is being stored under the controlled atmosphere conditions, for example as a result of potato respiration increasing the carbon dioxide concentration of either atmosphere. Nevertheless, the remaining storage parameters of the control potatoes, such as temperature, storage density, atmospheric pressure, etc. are selected so as to be substantially the same as those of the potato crop being stored; in other words the control storage conditions may vary slightly from the crop storage conditions with respect to composition of the atmosphere only, with other storage parameters or variables being substantially the same.

Preferred features of the present invention are defined in the dependent claims.

The present invention relates to a method of storing potatoes using targeted ethylene timings in combination with 1-methylcyclopropene (1-MCP) which mitigates sugar increases typically associated with the use of untargeted ethylene whilst suppressing sprout growth and development.

The timing of the ethylene treatment may be targeted either by using detection of potato eye movement as a trigger to initiate the ethylene treatment and/or by providing a time delay between the 1-MCP treatment and the ethylene treatment, for example by providing that the ethylene treatment step is initiated at least 4 weeks, optionally from 4 to 8 weeks, after the 1-MCP treatment. These treatment protocols provide, in practice for the potato harvest that is stored, that the ethylene is not continuously applied throughout the potato storage period, but in contrast is applied "late" at a significant time delay after the initial curing, optional CIPC, and 1-MCP treatments (although infrequently when there is a poor potato season the ethylene may need to be applied immediately after pulldown as potato eye movement, for example at least 10% potato eye movement, may have already been reached at the start of the potato storage regime).

The preferred embodiments of the present invention employ 1-methylcyclopropene (1-MCP), as a first treatment, and ethylene, as a second treatment, as sequential chemical treatments, either in the absence of CIPC, or in the presence of a reduced total dose of CIPC as compared to current commercial CIPC doses. For example, a typical current commercial dose of CIPC is a total of 24-36 grams per tonne of potatoes, whereas when CIPC is optionally used in the method of the present invention each of the first and optional second pretreatment steps may employ a chlorpropham (CIPC) concentration of from 10 to less than 18 grams, optionally from 12 to 15 grams, per tonne of potatoes, which enables the option of a reduced total CIPC dose to be employed as compared to current commercial CIPC doses.

Compared to known approaches to attempt to store potatoes to achieve sprout growth suppression as discussed above, the present invention can provide the combination of (a) reduced sprout growth and (b) maintenance of low levels of sugars, such as fructose, glucose and sucrose, in the stored potatoes.

The 1-methylcyclopropene (1-MCP) chemical treatment before the ethylene chemical treatment can provide the advantage of lower total ethylene use as compared to continuous ethylene application, since the ethylene may be applied only after eye movement. The storage costs are reduced as compared to the use of continuous ethylene, and there is no detrimental effect on eye movement, i.e. there is no earlier incidence of eye movement, as compared to the use of continuous ethylene.

In the preferred embodiments of the method of the present invention, prior to the 1-MCP treatment step, the cured dormant potatoes have not been subjected to a temperature pulldown to the storage temperature. By applying the 1-methylcyclopropene (1-MCP) chemical treatment before pulldown and before the ethylene chemical treatment, the sugar concentration of the stored potatoes is reduced as compared to applying the 1-methylcyclopropene (1-MCP) chemical treatment after pulldown and before the ethylene chemical treatment. This enhances potato quality for processing potatoes, and can reduce browning during frying or other high temperature cooking.

In addition, by applying the 1-methylcyclopropene (1-MCP) chemical treatment before pulldown and before the ethylene chemical treatment, the weight loss of potatoes during storage can be reduced, which increases the yield of usable potatoes particularly when there is a poor quality potato crop. The reduced weight loss is believed to result primarily from reduced water loss during storage. Such reduced weight loss is also associated with improved texture, since the firmness of the potato is maintained for longer, resulting in improved potato texture during processing.

For table potatoes, the present invention can permit the potatoes to be stored at higher storage temperatures than those currently conventionally used, reducing the energy footprint of the storage, and/or obviates or reduces the need for other sprout suppressing chemicals, such as CIPC, during storage, which provides consumer benefits.

Processing potatoes may, for example, be fried to produce potato chips or French fries. The present invention can permit such processing potatoes to be stored under such higher storage temperatures while obviating or reducing the need for other sprout suppressing chemicals, such as CIPC, during storage, and can also achieve lower reducing sugar concentrations in the stored potatoes. This can significantly mitigate or avoid the problem of increased sugars, such as fructose, glucose and sucrose, in the potatoes. Increased levels of the reducing sugars glucose and fructose are associated with an increase in the incidence of browning during cooking, particularly during frying, and a reduction in, and an increase in the variability of, product quality during the manufacture of potato products such as potato chips, or potato crisps.

The present invention is at least partly predicated on the finding by the present inventors that when using both 1-MCP and ethylene in a potato storage protocol, a specific targeted application of 1-MCP to the storage atmosphere prior to any pulldown of the temperature of the potatoes to a storage temperature, for example of below 10 or 8°C, and in fact avoiding any pulldown to that low temperature range for the entire storage regime, can unexpectedly achieve even lower concentrations of reducing sugars, while still achieving effective sprout suppression. In preferred embodiments, prior to the 1-MCP treatment step, the cured dormant potatoes have not been subjected to a temperature pulldown to the storage temperature. By treating with 1-MCP at a relatively high temperature, which is at least 10°C, and then treating with ethylene after eye movement, the reducing sugar concentration can be reduced as compared to treating with 1-MCP at a relatively low temperature, after pulldown to a temperature which is below 10°C, and then treating with ethylene after eye movement.

The inventors have found that by providing a controlled time/temperature relationship for both the 1-MCP treatment and then the subsequent ethylene treatment, with the ethylene treatment, in some embodiments, being applied in response to observed eye movement, and/or typically the ethylene treatment step being initiated at least 4 weeks, optionally from 4 to 8 weeks, after the 1-MCP treatment, the ecodormant period of the potatoes during storage can be extended without adversely increasing the levels of sugars in the potatoes. This combined benefit is not derivable intuitively from the state of the art previously disclosed with respect to potato storage, and in particular with 1-MCP and then ethylene treatment. The present inventors have even further overcome the conflict in the prior art between achieving extended dormancy on the one hand and achieving minimal levels of sugars on the other hand.

By providing extended potato dormancy without increasing sugar levels and by the use of no chemical sprout suppressant (such as CIPC), or a lower level of chemical sprout suppressant (such as CIPC) as compared to known commercially implemented regimes for potato storage, the present invention can provide a number of technical and commercial advantages over the state of the art.

First, the potato storage regime is easier to control in order to reliably and consistently provide a high quality supply of stored potatoes for an extended period after harvesting. The use of eye movement as a control parameter for the variable of storage atmosphere, which may be the single modified variable of the entire storage regime, provides a readily implementable potato storage regime.

Second, the controlled atmosphere potato storage regime of the present invention may be employed as one option to providing an alternative, or a supplement, to the use of a chemical sprout suppressant such as CIPC, if CIPC was to be withdrawn or stricter regulations on its use were to be imposed by food safety regulators.

Third, processing potatoes can be stored at a higher storage temperature without compromising sprout suppression or the maintenance of low concentrations of sugars such as fructose and glucose which is particularly desirable for potatoes to be processed by a cooking step such as frying. The higher storage temperature reduces storage costs and minimizes sugar content.

Embodiments of the present invention will now be described by way of example only, with reference to the accompanying drawings, in which:
Figure 1 shows the relationship between the fructose level and the storage period for potatoes stored in Examples according to the invention and Comparative Examples;
Figure 2 shows the relationship between the fructose level and the storage period for potatoes stored in Examples according to the invention and Comparative Examples;
Figure 3 shows the relationship, disclosed in a paper which is part of the state of the art, between the fructose level and the storage period for potatoes stored by a method not in accordance with the present invention;
Figure 4 shows the relationship between the fructose level and the storage period for potatoes stored in Examples according to the invention and Comparative Examples;
Figure 5 shows the relationship between the mean value of the b* colour coordinate of a fried potato chip produced from the stored potatoes and the storage period for potatoes stored in Examples according to the invention and Comparative Examples;
Figure 6 shows the relationship between the mean value of weight loss and the storage period for potatoes stored in Examples according to the invention and Comparative Examples;
Figure 7 shows the relationship between the fructose level and the storage period for potatoes stored in Examples according to the invention and Comparative Examples;
Figure 8 shows the relationship between the mean number of tubers with eye movement and the storage period for potatoes stored in Examples according to the invention and Comparative Examples; and
Figure 9 shows the sprouting behaviour disclosed in a paper which is part of the state of the art, of potatoes stored by three different methods each not in accordance with the present invention.

The present invention relates to a method of storing potatoes. The method comprises the initial step of providing a plurality of dormant potatoes. The dormant potatoes preferably include at least some potatoes that are endodormant. However, the plurality of dormant potatoes may include at least one or more ecodormant potatoes, and so the plurality of dormant potatoes may comprise endodormant potatoes, ecodormant potatoes or a combination of ecodormant and endodormant potatoes.

As is well known to those skilled in the art of potato production and storage, curing, also known in the art as suberization, is an important element of modern potato production. Curing heals wounds in the potato surface that are formed during harvesting by promoting suberin formation below damaged cells, and also dries the crop to reduce disease development. Curing can be achieved in the field or artificially in store.

In the method of the present invention, the potatoes have been cured after harvesting; for example, before the first treatment step ii, the potatoes have been cured after harvesting by storing the potatoes at a temperature within a temperature range of typically from 10 to 20°C for a period of from 3 to 14 days, preferably at a relative humidity of from 90 to 95%, in atmospheric air at atmospheric pressure. The curing temperature is typically the harvest temperature. The harvest temperature may vary between different potato growing regions around the world. The curing is conventionally carried out after harvesting in order to allow a protective layer of cells to form an outer skin on the tubers and to allow at least partial healing of wounds caused by the harvesting process.

After curing, the potatoes may, or may not, be pre-treated with a sprout suppressant, for example chlorpropham (CIPC).

In some embodiments of the present invention the cured potatoes have not been pretreated with a sprout suppressant.

In other embodiments of the present invention the potatoes have been pre-treated with a sprout suppressant, such as chlorpropham (CIPC), but the present invention can utilize lower concentrations of the chlorpropham (CIPC) sprout suppressant than are currently conventionally used in commercial potato storage, because if CIPC is optionally used, it is typically only used in a single treatment, rather than used in plural sequential CIPC treatments that are used in the commercial potato storage regimes of the prior art. CIPC treatment of potatoes is well known to those skilled in the art of potato production and storage. For example, as is well known in the art, CIPC can be applied as a fog using a petrol or electro fogger. Multiple fog formulations are commercially available (i.e. solid or liquid). Tubers can also be dipped into a CIPC liquid formulation.

Typically, the pre-treatment with the chlorpropham (CIPC) sprout suppressant comprises: a first pretreatment step which exposes the potatoes to the chlorpropham (CIPC) sprout suppressant at a chlorpropham (CIPC) concentration of from 10 to less than 18 grams per tonne of potatoes after curing and within a period of less than 4 weeks from harvesting. Optionally, the pre-treatment may further comprise a second pretreatment step which exposes the potatoes to the chlorpropham (CIPC) sprout suppressant at a chlorpropham (CIPC) concentration of from 10 to less than 18 grams per tonne of potatoes within a period of from 2 to 8 weeks, optionally from 3 to 5 weeks, after the first pretreatment step. In each of the first and second pretreatment steps the chlorpropham (CIPC) concentration may be from 12 to 15 grams per tonne of potatoes. In one example, the first CIPC pretreatment is carried out within 2 weeks of harvesting and the second CIPC pretreatment is carried out within about 4 to 5 weeks after the first CIPC pretreatment. Preferably, the second pretreatment step is not employed, but is omitted, so that the total CIPC concentration, if CIPC is used in embodiments of the present invention, is from 10 to less than 18 grams per tonne of potatoes, such as from 12 to 15 grams per tonne of potatoes. However, as described above preferably a CIPC sprout suppressant pretreatment is not used in the preferred embodiments of the present invention.

Preferably, the potatoes are endodormant prior to their subsequent treatment and storage, as described below.

The cured, and optionally CIPC pretreated, potatoes are then treated chemically by a first treatment step of treating the potatoes with 1-methylcyclopropene (1-MCP). The 1-MCP can be applied before or after the CIPC treatment. Prior to the 1-MCP treatment step, the cured dormant potatoes have not been subjected to a temperature pulldown to the storage temperature.

Therefore the treatment protocol according to embodiments of the preset invention may comprise the following sequences:
i. Cure harvested potatoes; treat with 1-MCP; treat with CIPC; temperature pulldown to storage temperature; store at storage temperature and monitor dormancy; treat with ethylene after dormancy break or preset time period;
ii. Cure harvested potatoes; treat with CIPC; treat with 1-MCP; temperature pulldown to storage temperature; store at storage temperature and monitor dormancy; treat with ethylene after dormancy break or preset time period; or
iii. Cure harvested potatoes; treat with 1-MCP; temperature pulldown to storage temperature; store at storage temperature and monitor dormancy; treat with ethylene after dormancy break or preset time period.

Preferably, the time period between curing and temperature pulldown should be as short as possible, but allowing for a 24h 1-MCP treatment followed by 24h ventilation period in air, and, if employed, a 6h CIPC treatment.

In specific embodiments, the first treatment step of treating the potatoes with 1-methylcyclopropene is carried out either (a) prior to chilling the potatoes, and in particular prior to chilling the potatoes to a chilled temperature at which they are to be stored in a long term (i.e. a period of at least one month) potato storage facility, or (b) without any subsequent chilling of the potatoes prior to and during long term storage.

In some embodiments the stored potatoes may not be chilled as compared to the preceding 1-MCP treatment temperature. For example the 1-MCP treatment temperature is within the range of from 10 to 30°C, and the storage temperature may be within a partially overlapping storage temperature range of from 8 to 13°C. Alternatively, the 1-MCP treatment temperature may be a value that is within the range of from 10 to 30°C but above a storage temperature that is within the range of from 8 to 13°C.

In other embodiments, the potatoes are chilled as compared to the 1-MCP treatment temperature. For example, the 1-MCP treatment temperature is a value that is within the range of from 10 to 30°C, and the 1-MCP treatment temperature is above a chilled storage temperature that is within the range of from 4 to less than 13°C. This chilled storage temperature range includes a lower sub-range of from 4 to less than 8°C for potatoes to be sold for use as table potatoes, i.e. for domestic use, and a higher sub-range of from 8 to less than 13°C for potatoes to be sold to be processed commercially, for example to manufacture potato chips or crisps.

Such cooling of potatoes to a chilled storage temperature range, for example within the range of from 4 to less than 13°C, is typically known to those skilled in the art of potato storage as "pulldown" - in "pulldown" the potato tubers are subjected to a controlled cooling regime from an initial temperature, typically the temperature at which the potatoes were transported and delivered to the potato storage facility, to a lower storage temperature. For example, a typical controlled cooling regime cools the potatoes from a delivery temperature of about 10 to 20°C to a storage temperature of from 4 to less than 13°C, for example about 6°C, at a controlled chilling rate selected to minimize chilling stresses in the potatoes and allow time for any further wound healing in addition to any wound healing previously occurring during the curing process. A typical cooling rate is a 0.5°C reduction in temperature per day at ambient relative humidity.

The chemical treatment comprises a first treatment step of treating the potatoes with 1-methylcyclopropene, and prior to the first treatment step, the cured dormant potatoes have been maintained, post curing, at a temperature of from 10°C to 30°C.

The first treatment step comprises exposing the potatoes to 1-methylcyclopropene. Prior to the 1-MCP treatment step, the cured dormant potatoes may not have been subjected to a temperature pulldown to the storage temperature. During the first treatment step the potatoes are at a first treatment temperature within the range of from 10 to 30°C, and typically from 12 to 25°C, for example from 12 to 22°C. Specific typical treatment temperatures are 13°C and 21.5°C.

Typically, the first treatment step may be carried out for a first treatment period of at least 12 hours, optionally from 12 to 36 hours, further optionally from 18 to 30 hours, yet further optionally about 24 hours.

Typically, during the first treatment step the potatoes are stored in a store (which may be the same store used for subsequent long term storage) having a store volume, and the 1-methylcyclopropene is applied at a concentration of from 0.5 to 5 µL/L, optionally from 0.5 to 2 µL/L, further optionally from 0.75 to 1.25 µL/L, yet further optionally about 1 µL/L, wherein the concentration in µL/L is the ratio of the volume of 1-methylcyclopropene to the store volume.

The 1-methylcyclopropene is typically in a commercially available powder form in which the 1-MCP is bound with cyclodextrin, which is treated to generate 1-methylcyclopropene in gaseous form from the 1-methylcyclopropene powder. The 1-MCP was applied by adding the powdered 1-MCP (e.g. the product sold under the trade mark Smartfresh sold by Rohm and Haas, PA, USA) to warm water (50°C) to release the gas, as disclosed in section 2.2.1 of the Foukaraki et al paper entitled "Impact of ethylene and 1-MCP on sprouting and sugar accumulation in stored potatoes" as discussed above. For example, to generate 1-MCP at a concentration of 1 µL/L in air, a dose of 1.8 g of Smartfresh (comprising 0.14 wt% 1-MCP) is added to a conical flask, then 20 mL of warm water at 50°C was added to release the gaseous 1-MCP. The concentration of the 1-MCP may be measured and checked using calibrated gas chromatography.

Therefore, prior to the subjecting of the potatoes to the storage temperature, the cured dormant potatoes are treated with 1-methylcyclopropene by exposing the potatoes to 1-methylcyclopropene.

After the first treatment step of 1-methylcyclopropene, the potatoes are then stored at the second storage temperature. Typically, for processing potatoes the second storage temperature is within the range of from 8 to less than 13°C, whereas for table or domestic potatoes the storage temperature may be from 4 to less than 8°C.

Preferably, the potatoes are stored in atmospheric air at atmospheric pressure. However, the gaseous environment may alternatively comprise atmospheric air to which additional carbon dioxide has been added (the carbon dioxide displacing other gases present in air), and the added carbon dioxide may at least in part be provided by respiratory carbon dioxide emitted from the stored potatoes.

The stored potatoes, or control potatoes, may bemonitored for an indicator of dormancy break, at which the endodormant potatoes become ecodormant potatoes, and require further environmental treatment or control to suppress sprout growth. As described above, the term "eye movement" refers to the early visible stages of growth of tuber meristems which if not suppressed will go on to form sprouts, and in this specification "eye movement" as an indicator of dormancy break means that the tuber meristems have grown to a length of at least 1 mm, and the detected eye movement may be present anywhere on the outer surface of the potato tuber.

In the present invention, the eye movement as an indicator of dormancy break is defined as meaning that any tuber meristems have grown to a length of at least 1 mm. Such eye movement is visible to the naked eye. The tuber meristems, if not suppressed, would continue to grow and form sprouts in the potatoes.

Therefore, preferably the present invention includes the step of monitoring the dormancy of the stored potatoes or of control potatoes stored in atmospheric air. In response to initiation of eye movement of at least one of the stored potatoes or of at least one control potato stored in atmospheric air, the stored potatoes are treated with ethylene, the treatment comprising exposing the stored potatoes, which are at the storage temperature, to ethylene which is added to the atmospheric air.

Therefore, in some embodiments, when eye movement has been detected, the stored potatoes are subjected to a second chemical treatment, which is preferably carried out while stored potatoes remain in the same storage facility and at the same second storage temperature. In other words, the second chemical treatment chemically treats the potatoes during the long term storage regime either (a) when the storage is at a temperature (typically at least 10°C) which is sufficiently high that there has been no chilling or "pulldown" of the potatoes, or (b) after "pulldown" when the storage is at a temperature which is sufficiently low that there has been chilling of the potatoes prior to storage.

In the subsequent second treatment step during the storing step, the potatoes are treated with ethylene. The treatment comprises exposing the stored potatoes, which are at the second storage temperature, to ethylene. Typically, in the second treatment step the potatoes are treated continuously with ethylene so that, after initiation of the second treatment step, the potatoes are stored in an ethylene-containing atmosphere, during the storing step.

The treatment of stored potato tubers by ethylene is well known in the art, and is disclosed in various prior art documents as summarized hereinabove. Ethylene can be applied using any of the various known methods as long as the desired concentration is achieved and maintained. Known ethylene treatments include the commercially-available Restrain ethylene generator which converts ethanol to ethylene (https://www.restrain.eu.com/equipment/) or the commercially-available BioFresh system (http://www.bio-fresh.com/ethylene-management-system/ ) which uses ethylene gas canisters.

During the storing step, and the second treatment step, the potatoes are stored in a store having a store volume. Preferably, the ethylene is applied at a concentration of from 5 to 20 µL/L, optionally from 5 to 15 µL/L, further optionally from 7.5 to 12.5 µL/L, yet further optionally about 10 µL/L, wherein the concentration in µL/L is the ratio of the volume of ethylene gas, measured under the pressure and temperature conditions of the storage step, to the store volume.

The initiation of the application of the ethylene may be determined by monitoring the nature of the dormancy of the potatoes.

In the preferred embodiments of the present invention, the second treatment step is initiated after eye movement in at least one control potato stored in atmospheric air, optionally in from 1 to 10 %, by number of potatoes, of a plurality of control potatoes stored in atmospheric air.

In alternative embodiments of the present invention, the second treatment step is initiated after eye movement in at least one of the stored potatoes, optionally after eye movement in from 1 to 10 % by number of the stored potatoes.

Accordingly, in the method of storing potatoes according to preferred embodiments of the invention, the dormancy of the dormant potatoes, treated by 1-MCP, is monitored and in response to eye movement of at least one of the stored potatoes or of at least one control potato, the potatoes are treated with ethylene.

The present invention is illustrated further with reference to the following non-limiting Examples.

### Example 1

Potato tubers of the commercially available cultivar Lady Rosetta which had been harvested in the summer of 2013 and had been initially treated with 12 grams/tonne CIPC (chlorpropham) growth suppressant were provided. The tubers were dormant and had been cured conventionally. Upon arrival at the laboratory testing facility in October 2013, two batches of the potatoes were prepared. For each batch, the tubers were placed in stackable trays and stored in an air tight storage box of at least 100 litres capacity which was sealed with water.

The first batch of potatoes was immediately exposed to 1-MCP at a concentration of 1 µL/L based on the volume of the storage box for a period of 24 hours, with the exposed potatoes being at an ambient temperature of about 21.5°C. There was no temperature pulldown to the storage temperature before the 1-MCP treatment. Hereinafter, this treatment protocol is called "early 1-MCP". The potatoes were then stored at a storage temperature of 10°C. The treated potatoes were not subjected to a temperature pulldown to a temperature of below 10°C before the 1-MCP treatment.

In January 2014, the treated potatoes of the first batch were subjected to an ethylene treatment in which the potatoes were exposed to ethylene added to the atmospheric air at a concentration of 10 µL/L based on the volume of the storage box. The ethylene was applied continuously. The exposed potatoes were at the storage temperature of 10°C. Thereafter, the treated potatoes were continued to be stored at the storage temperature of 10°C.

The second batch of potatoes was treated with ethylene and 1-MCP as described above, but in the reverse order.

Accordingly, in October 2013 the potatoes of the second batch were subjected to an ethylene treatment in which the potatoes were exposed to ethylene added to the atmospheric air at a concentration of 10 µL/L based on the volume of the storage box. The ethylene was applied continuously. The exposed potatoes were at the storage temperature of 10°C. Thereafter, the treated potatoes were continued to be stored at the storage temperature of 10°C.

In January 2014, the treated potatoes of the second batch were exposed to 1-MCP at a concentration of 1 µL/L based on the volume of the storage box for a period of 24 hours, with the exposed potatoes being at the storage temperature of 10°C. Hereinafter, this treatment protocol is called "late 1-MCP". The potatoes were then again stored at the storage temperature of 10°C.

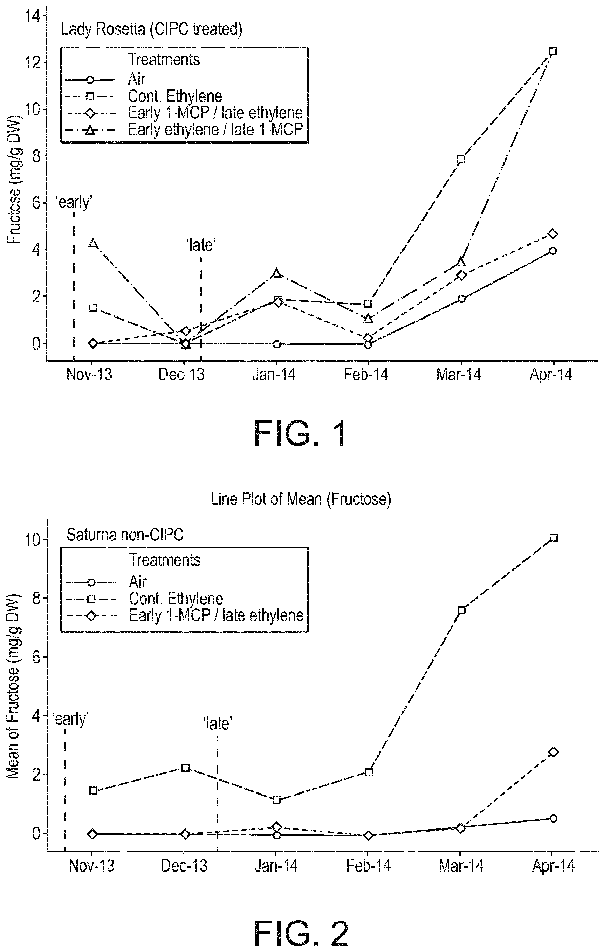

The fructose concentration of the potatoes of both the first and second batches was measured on a monthly basis, and the results are shown in Figure 1. The plot of the first batch is identified as "Early 1-MCP/late ethylene" and the plot of the second batch is identified as "Early ethylene/late 1-MCP". As a further comparison, plots of (i) a comparative batch of potatoes stored in air is identified as "Air", and (ii) a comparative batch of potatoes continuously stored in ethylene (at the same dose in atmospheric air as used for the first and second batches) is identified as "Continuous ethylene".

It may be seen that for the "Early ethylene/late 1-MCP" plot and the "Continuous ethylene" plot, the fructose concentration of the stored potatoes rapidly increased after February 2014, to a value of 12 mg/g DM (dry mass) in April 2014. In contrast, the plots for "Early 1-MCP/late ethylene" and "Air" had reduced fructose concentrations over the storage period to April 2014. Thus the "Early ethylene/late 1-MCP" and "Continuous ethylene" plots show that the fructose concentration of the stored potatoes rapidly increases when the ethylene is continuously applied during storage, either in the absence of any prior 1-MCP treatment or after a late 1-MCP treatment.

This experimental data shows that the order of 1-MCP and ethylene treatment is important for the maintenance of low reducing sugar levels in the stored potatoes. Using an "Early 1-MCP/late ethylene" protocol can maintain low levels of reducing sugars, whereas the reverse treatment protocol of "Early ethylene/late 1-MCP" leads to unacceptable increased levels of reducing sugars in the stored potatoes.

However, the treatment protocol should achieve the combination of (a) reduced sprout suppression and (b) reduced fructose concentration over the storage period.

The plot for "Air" was associated with reduced sprout suppression, because of the absence of ethylene as a sprout suppressant. Thus, the plot for "Air" is not associated with achieving the combination of (a) reduced sprout suppression and (b) reduced fructose concentration over the storage period.

The plot for "Early 1-MCP/late ethylene" was however associated not only with reduced sprout suppression, but also with reduced fructose concentration over the storage period, because both the 1-MCP and the ethylene function as sprout suppressants, and also the 1-MCP functions to reduce the formation of reducing sugars such as fructose which otherwise is formed as a result of the potato being exposed to ethylene over the storage period.

It may be seen particularly from the plot for "Early 1-MCP/late ethylene" that the fructose concentration in June 2014 was a maximum of about 4 mg/g DW.

This Example shows that the method of the present invention can achieve low sugar concentration without advancing eye movement or sprout suppression, and this can be achieved using early applied 1-MCP and late applied ethylene, after eye movement, and relatively high storage temperatures.

### Example 2

Potato tubers of the commercially available cultivar Saturna which had been harvested in the summer of 2013 and had not been initially treated with CIPC (chlorpropham) sprout suppressant were provided. The tubers were dormant and had been cured conventionally. Upon arrival at the laboratory testing facility in October 2013, two batches of the potatoes were prepared. For each batch, the tubers were placed in stackable trays and stored in an air tight storage box of at least 100 litres capacity which was sealed with water.

The first batch of potatoes was immediately exposed to 1-MCP at a concentration of 1 µL/L based on the volume of the storage box for a period of 24 hours, with the exposed potatoes being at an ambient temperature of about 21.5°C. There was no temperature pulldown to the storage temperature before the 1-MCP treatment. The potatoes were then stored at a storage temperature of 10°C. The treated potatoes were not subjected to a temperature pulldown to a temperature of below 10°C before the 1-MCP treatment.

In January 2014, the treated potatoes of the first batch were subjected to an ethylene treatment in which the potatoes were exposed to ethylene added to the atmospheric air at a concentration of 10 µL/L based on the volume of the storage box. The ethylene was applied continuously. The exposed potatoes were at the storage temperature of 10°C. Thereafter, the treated potatoes were continued to be stored at the storage temperature of 10°C.

The fructose concentration of the potatoes of the first batch was measured on a monthly basis, and the results are shown in Figure 2. The plot of the first batch is identified as "Early 1-MCP/late ethylene". As a comparison, plots of (i) a comparative batch of potatoes stored in air is identified as "Air", and (ii) a comparative batch of potatoes continuously stored in ethylene (at the same dose in atmospheric air as used for the first batch) is identified as "Continuous ethylene".

It may be seen that for the "Continuous ethylene" plot, the fructose concentration of the stored potatoes rapidly increased after January 2014, to a value of 10 mg/g DM (dry mass) in June 2014. In contrast, the plots for "Early 1-MCP/late ethylene" and "Air" had reduced fructose concentrations over the storage period. Thus the "Continuous ethylene" plot shows that the fructose concentration of the stored potatoes rapidly increases when the ethylene is continuously applied during storage and in the absence of any prior 1-MCP treatment.

However, the plot for "Air" was also associated with reduced sprout suppression, because of the absence or reduction of ethylene as a sprout suppressant. Thus, the plot for "Air" is not associated with achieving the combination of (a) reduced sprout suppression and (b) reduced fructose concentration over the storage period.

The plot for "Early 1-MCP/late ethylene" was however associated not only with reduced sprout suppression, but also with reduced fructose concentration over the storage period, because both the 1-MCP and the ethylene function as sprout suppressants, and also the 1-MCP functions to reduce the formation of reducing sugars such as fructose which otherwise is formed as a result of the potato being exposed to ethylene over the storage period.

It may be seen particularly from the plot for "Early 1-MCP/late ethylene" that the fructose concentration in June 2014 was a maximum of 3 mg/g DM.

This Example shows that the method of the present invention can achieve low sugar concentration without advancing eye movement, and this can be achieved using early applied 1-MCP and late applied ethylene, after eye movement, and relatively high storage temperatures.

Similar results, with regard to sugar reduction, were found for other potato cultivars that had not been pre-treated with CIPC, in particular the cultivars Lady Rosetta, VR808, Shelford and Lady Claire.

### Comparative Example 1

This Comparative Example is taken from the paper by Sofia G. Foukaraki, Katherine Cools, Gemma A. Chope and Leon A. Terry, entitled" Impact of ethylene and 1-MCP on sprouting and sugar accumulation in stored potatoes", Postharvest Biology and Technology 114 (2016) 95-103.

In this Comparative Example, a number of potato cultivars were tested. In particular, the potato cultivar Saturna was tested. This being the same cultivar as tested in Example 2. In this Comparative Example, no sprout suppressant (such as CIPC), had been applied to the potatoes after a conventional curing regime. The potato tubers underwent a controlled "temperature pulldown" cooling regime from 15°C (arrival temperature), at a rate of 0.5°C reduction per day at ambient relative humidity (RH), to a holding temperature of 6°C, in order to minimize chilling stress and allow time for wound healing.

After reaching 6°C, three batches of the tubers were treated differently.

After a period of 1 week a first batch was exposed to 1 µL 1-MCP per L for 24 h at 6°C, and then after a further period of 4 weeks (i.e. at a total of 5 weeks) stored under continuous 10 µL ethylene per L of air, which in this Comparative Example is called a "late ethylene" treatment.

A second batch was not treated with 1-MCP and after a total period of 3 weeks was stored under continuous 10 µL ethylene per L of air, which in this Comparative Example is called a "continuous ethylene" treatment.

A third batch was stored in air, which in this Comparative Example is called an "air" treatment.

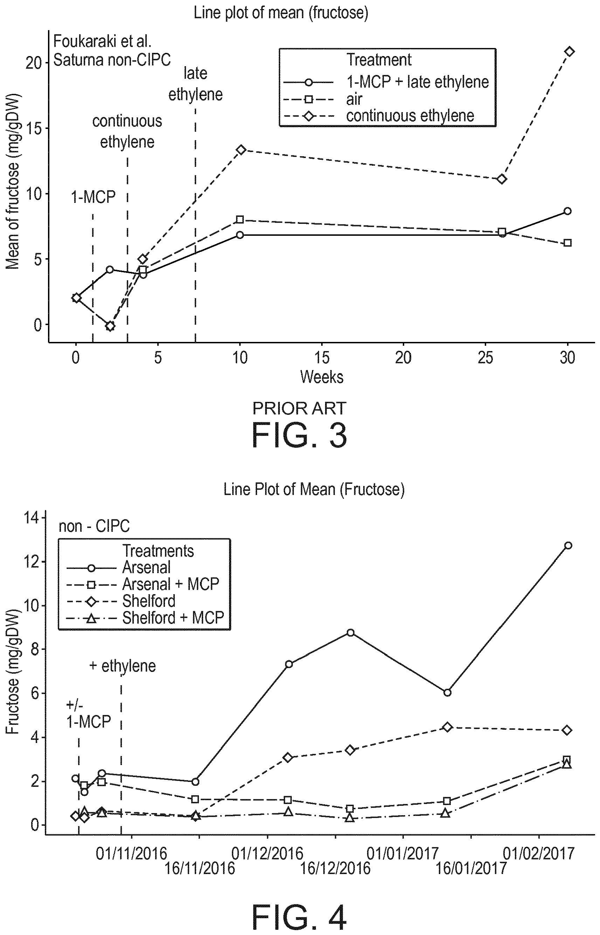

As for Examples 1 and 2, the fructose content of the potatoes was measured intermittently. The results are shown in Figure 3.

The graph of Figure 3 shows the result when the Saturna potatoes were treated with 1-MCP after pulldown to 6°C.

As for Figures 1 and 2, the use of an early1-MCP treatment with subsequent late ethylene treatment, by transfer from air to ethylene, provides significantly lower levels of reducing sugars as compared to storage in continuous ethylene, and substantially similar levels of reducing sugars as compared to storage in air, although storage in air would not achieve acceptable sprout suppression.

However a comparison of Figures 2 and 3 shows the technical effect of early 1-MCP treatment before pulldown, in accordance with the present invention, as compared to early 1-MCP treatment after pulldown, in accordance with the disclosure of the Foukaraki et al. paper identified above in this Comparative Example.

Figure 3 shows that the use of 1-MCP after pulldown substantially eliminated an ethylene induced sugar peak. Also, at least in the middle of the 30 week storage period, the fructose levels in the stored potatoes were lower using the 1-MCP than the control treatment of storage in air without using 1-MCP.

However, whether or not 1-MCP was used, the fructose level across the entire testing period greater than about 5 weeks remained above the concentration value of 5 mg/g fructose DW (dry weight).

The same potato cultivar Saturna was used in Example 2 and Comparative Example 1, and the 1-MCP and ethylene dosage concentrations were the same, and the late ethylene, if not continuous, was added at substantially the same eye movement trigger. The essential difference between the experimental parameters of Example 2 and Comparative Example 1 is that in Example 2 the 1-MCP was applied before temperature pulldown whereas in Comparative Example 1 the 1-MCP was applied after temperature pulldown. This parameter difference unexpectedly results in a reduction in the fructose concentration during the storage phase.

A comparison between the results of Example 2 and Comparative Example 1 shows that the timing of 1-MCP application before the potato temperature has been reduced by temperature pulldown, or example to a temperature of below 10°C or below 8°C, can cause an even further reduction of the sugar content of stored potatoes when stored in long term storage. This technical effect can be achieved without the use of conventional spout suppressants, such as CIPC.

### Example 3

Potato tubers of two commercially available potato cultivars, Arsenal and Shelford, which had been harvested in the summer of 2016 and had not been initially treated with CIPC (chlorpropham) sprout suppressant were provided. The tubers were dormant and had been cured conventionally. Upon arrival at the pilot testing facility in October 2016 the tubers were placed in 1 tonne wooden boxes and stored in a pilot plant potato storage unit having a positive air flow plenum.

For each cultivar, a first batch of the potatoes was immediately exposed to 1-MCP at a concentration of 1 µL/L based on the volume of the potato storage unit for a period of 24 hours, with the exposed potatoes being at a temperature of about 13°C, and a second batch was not exposed to 1-MCP. There was no temperature pulldown to the storage temperature before the 1-MCP treatment. The potatoes of the first and second batches were then stored at a storage temperature of 8.5°C. The potatoes of the first and second batches were not subjected to a temperature pulldown, i.e. to a temperature reduction to a storage temperature before the 1-MCP treatment.

In early November 2016, the potatoes of the first and second batches were subjected to an ethylene treatment in which the potatoes were exposed to ethylene added to the atmospheric air at a concentration of 10 µL/L based on the volume of the potato storage unit. The ethylene was applied continuously. The exposed potatoes were at the storage temperature of 8.5°C. Thereafter, the potatoes of the first and second batches were continued to be stored at the storage temperature of 8.5°C.

The fructose concentration of the potatoes of the first and second batches was periodically measured, and the results are shown in Figure 4. For each cultivar, in Figure 4 the first batch is indicated with the letters "1-MCP" whereas the reference second batch is not; for example for the Arsenal cultivar, the first batch is indicated as Arsenal + MCP and the second batch is indicated as Arsenal.

It may be seen that for each cultivar the addition of ethylene to potatoes of the second batch which had not been treated with 1-MCP was generally associated with an increase in the fructose concentration. In contrast, for each cultivar the first batch which had been treated with 1-MCP was generally associated with a lower or minimal increase in the fructose concentration. The addition of ethylene to potatoes of the second batch for each cultivar which had not been treated with 1-MCP was generally associated with an increase in the fructose.

### Example 4

The pilot scale testing of Example 3 was also carried out on the same potato cultivars starting in October 2017 using the same temperature conditions. Potato tubers of the same two commercially available cultivars Arsenal and Shelford which had been harvested in the summer of 2017 and had not been initially treated with CIPC (chlorpropham) sprout suppressant were provided. The tubers were dormant and had been cured conventionally. Upon arrival at the pilot testing facility in October 2017 the tubers were placed in 1 tonne wooden boxes and stored in a pilot plant potato storage unit having a positive air flow plenum.

For each cultivar, a first batch of the potatoes was immediately exposed to 1-MCP at a concentration of 1 µL/L based on the volume of the potato storage unit for a period of 24 hours, with the exposed potatoes being at a temperature of about 13°C, and a second batch was not exposed to 1-MCP. There was no temperature pulldown to the storage temperature before the 1-MCP treatment. The potatoes of the first and second batches were then stored at a storage temperature of 8.5°C. The potatoes of the first and second batches were not subjected to a temperature pulldown to a storage temperature before the 1-MCP treatment.

On 10 November 2017, the potatoes of the first and second batches were subjected to an ethylene treatment in which the potatoes were exposed to ethylene added to the atmospheric air at a concentration of 10 µL/L based on the volume of the potato storage unit. The ethylene was applied continuously. The exposed potatoes were at the storage temperature of 8.5°C. Thereafter, the potatoes of the first and second batches were continued to be stored at the storage temperature of 8.5°C.

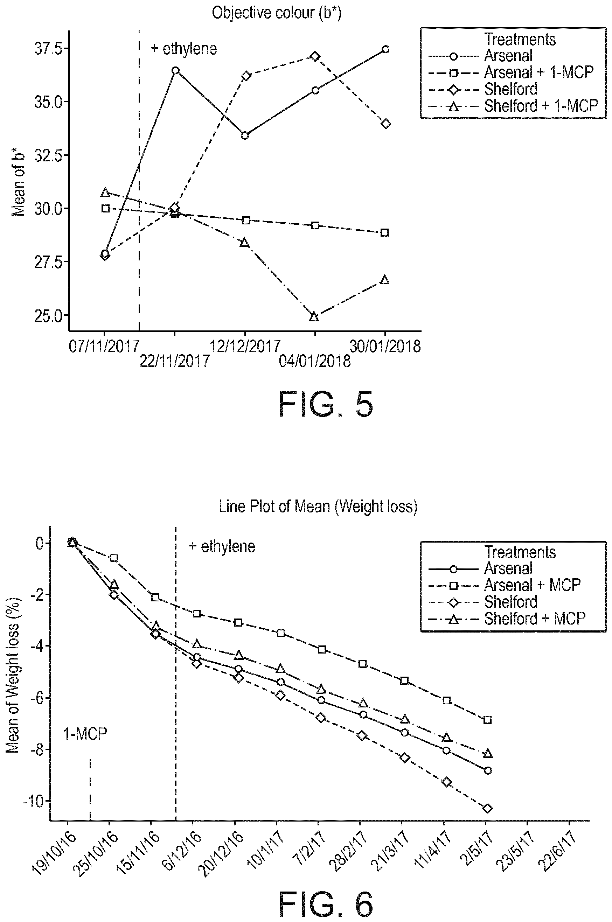

The potatoes of the first and second batches were periodically tested by producing fried potato chips from the potatoes, and measuring the coloration, expressed as the mean value of the b* colour coordinate of the CIELAB colour space. The b* colour coordinate, when positive, is associated with a yellow colour, and in the context of the testing of potato chips is associated with increased browning. The results are shown in Figure 5. For each cultivar, in Figure 5 the first batch is indicated with the letters "+MCP" whereas the reference second batch is not; for example for the Arsenal cultivar, the first batch is indicated as Arsenal + MCP and the second batch is indicated as Arsenal.

It may be seen that for each cultivar the addition of ethylene to potatoes of the second batch which had not been treated with 1-MCP was generally associated with a high value of the b* colour coordinate of a fried potato chip produced from the potato. In contrast, for each cultivar the first batch which had been treated with 1-MCP was generally associated with a lower value of the b* colour coordinate of a fried potato chip produced from the potato.

### Example 5

The pilot scale testing of Example 3 was also carried out on the same potato cultivars starting in October 2016 using the same temperature conditions. Potato tubers of the same two commercially available cultivars Arsenal and Shelford which had been harvested in the summer of 2016 and had not been initially treated with CIPC (chlorpropham) growth suppressant were provided. The tubers were dormant and had been cured conventionally. Upon arrival at the pilot testing facility in October 2016 the tubers were placed in 1 tonne wooden boxes and stored in a pilot plant potato storage unit having a positive air flow plenum. The carbon dioxide concentration of the atmosphere in the pilot plant potato storage unit was restricted to a maximum of 700 µL/L by operation of a fan in the storage unit.

For each cultivar, a first batch of the potatoes was immediately exposed to 1-MCP at a concentration of 1 µL/L based on the volume of the potato storage unit for a period of 24 hours, with the exposed potatoes being at a temperature of about 13°C, and a second batch was not exposed to 1-MCP. There was no temperature pulldown to the storage temperature before the 1-MCP treatment. The potatoes of the first and second batches were then stored at a storage temperature of 8.5°C. The potatoes of the first and second batches were not subjected to a temperature pulldown to the storage temperature before the 1-MCP treatment.

On 21 November 2016, the potatoes of the first and second batches were subjected to an ethylene treatment in which the potatoes were exposed to ethylene added to the atmospheric air at a concentration of 10 µL/L based on the volume of the potato storage unit. The ethylene was applied continuously. The exposed potatoes were at the storage temperature of 8.5°C. Thereafter, the potatoes of the first and second batches were continued to be stored at the storage temperature of 8.5°C.

The potatoes of the first and second batches were periodically tested by measuring the mean weight loss of the potatoes. The results are shown in Figure 6. For each cultivar, in Figure 6 the first batch is indicated with the letters "+MCP" whereas the reference second batch is not; for example for the Arsenal cultivar, the first batch is indicated as Arsenal + MCP and the second batch is indicated as Arsenal.

It may be seen that for each cultivar the addition of ethylene to potatoes of the second batch which had not been treated with 1-MCP was generally associated with an increased weight loss as compared to the potato for each cultivar of the first batch which had been treated with 1-MCP.

### Example 6

Example 3 was generally repeated and carried out on potatoes that had previously been treated with CIPC. Potato tubers of two commercially available cultivars Shelford and VR808 which had been harvested in October 2016 were provided. The tubers were dormant and had been cured conventionally. Upon arrival at the pilot testing facility in October 2016 the tubers were placed in 1 tonne wooden boxes and stored in a pilot plant potato storage unit having a positive air flow plenum. Therefore this example was a pilot test of a commercial scale process whereas the previous examples were laboratory scale tests.

For each cultivar, a first batch of the potatoes was immediately exposed to 1-MCP at a concentration of 1 µL/L based on the volume of the potato storage unit for a period of 24 hours, with the exposed potatoes being at a temperature of about 13°C, and a second batch was not exposed to 1-MCP. There was no temperature pulldown to the storage temperature before the 1-MCP treatment.

These potatoes were then treated with CIPC (chlorpropham) sprout suppressant 48 hours after the 1-MCP treatment commenced. A single CIPC dose of 12 g/tonne of potatoes was applied (using a fog) for a period of 6 hours in October 2016. Then, during the following day after the CIPC treatment, the potatoes were subjected to temperature pulldown to a storage temperature of 10°C. In other words, the treatment protocol was as follows: treat with 1-MCP for a period of 24 hours, ventilate in air for a period of 24 hours, treat with CIPC for a period of 6 hours, and finally subject to temperature pulldown to a storage temperature of 10°C the day after the CIPC treatment.

The potatoes of the first and second batches were then stored at a storage temperature of 10°C. The potatoes of the first and second batches were not subjected to a temperature pulldown to the storage temperature before the 1-MCP treatment.

In November 2016, the potatoes of the first and second batches were subjected to an ethylene treatment in which the potatoes were exposed to ethylene added to the atmospheric air at a concentration of 10 µL/L based on the volume of the potato storage unit. The ethylene was applied continuously. The exposed potatoes were at the storage temperature of 8.5°C. Thereafter, the potatoes of the first and second batches were continued to be stored at the storage temperature of 10°C.

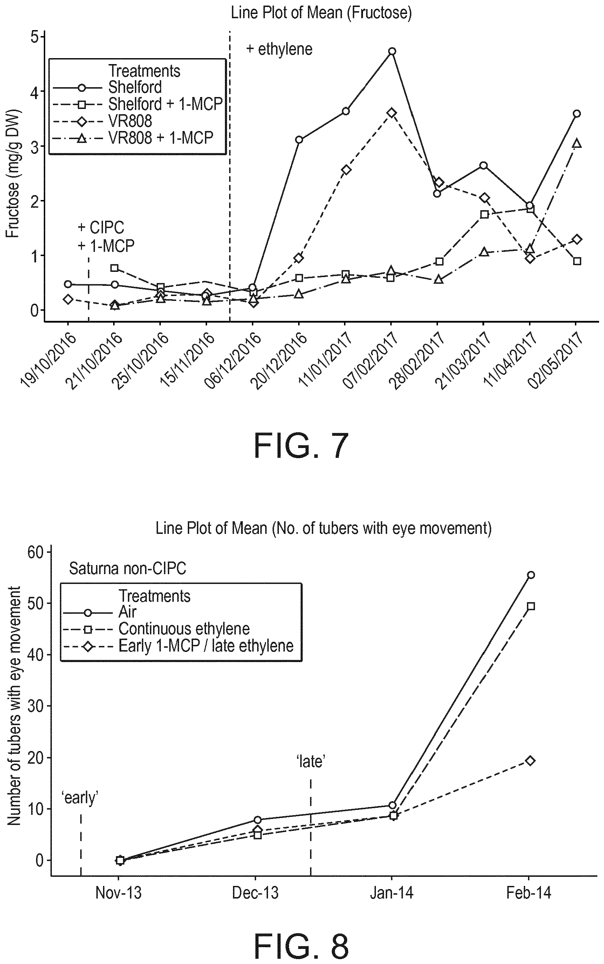

The fructose concentration of the potatoes of the first and second batches was periodically measured, and the results are shown in Figure 7. For each cultivar, in Figure 7 the first batch is indicated with the letters "+1-MCP" whereas the reference second batch is not; for example for the Shelford cultivar, the first batch is indicated as Shelford + 1-MCP and the second batch is indicated as Shelford.

It may be seen that for each cultivar the addition of ethylene to potatoes of the second batch which had not been treated with 1-MCP was generally associated with an increase in the fructose concentration. In contrast, for each cultivar the first batch which had been treated with 1-MCP was generally associated with a lower or minimal increase in the fructose concentration after addition of ethylene. The addition of ethylene to potatoes of the second batch for each cultivar which had not been treated with 1-MCP was generally associated with an increase in the fructose concentration.

This Example shows that the technical effect of reduced sugar concentration by treatment with 1-MCP and subsequent ethylene treatment at or before eye movement is achieved even when using a conventional sprouting suppressant such as CIPC.

### Example 7

In Example 2, Figure 2 shows the relationship between the fructose concentration and the storage time period for potato tubers of the cultivar Saturna which had not been treated with CIPC. As explained in Example 2, the 1-MCP and ethylene chemical components used in the treatment protocols function as sprout suppressants.

The sprout suppression function is shown in Figure 8. In Figure 8 there are three plots of the relationship between the number of tubers with eye movement and the storage time period for potato tubers of the cultivar Saturna which had not been treated with CIPC. The three plots correspond to the three treatments described above in Example 2.

The first plot corresponds to the present invention, in which the potato tubers were subjected to an early 1-MCP treatment, as indicated by the left-hand dashed line in Figure 8, and a subsequent late ethylene treatment, as indicated by the right-hand dashed line in Figure 8. There was no temperature pulldown to the storage temperature before the 1-MCP treatment. It can be seen that the numbers of tubers with eye movement was low even after a storage period of about 3 months. The 1-MCP and ethylene function as sprout suppressants, and the fact that ethylene was applied "late", after the 1-MCP treatment, did not prevent effective sprout suppression.

The second plot corresponds to a comparison with the present invention, in which the potato tubers were subjected to continuous ethylene treatment throughout the entire storage period, without any 1-MCP treatment. It can be seen that the numbers of tubers with eye movement was initially low, but after a storage period of about 2 months, the numbers of tubers with eye movement increased significantly. The first and second plots show that by combining an initial 1-MCP treatment and a subsequent later ethylene treatment, sprout suppression can be enhanced as compared to the use of continuous ethylene treatment. Thus an initial 1-MCP treatment, over a short treatment period, for example about 1 day, prior to a later ethylene treatment can provide improved sprout suppression in combination with significantly reduced ethylene consumption over the storage period.

The third plot corresponds to a comparison with the present invention, in which the potato tubers were stored in air throughout the entire storage period and were not subjected to any 1-MCP or ethylene treatment. Again, it can be seen that the numbers of tubers with eye movement was initially low, but after a storage period of about 2 months, the numbers of tubers with eye movement increased significantly. The second and third plots show that a continuous ethylene treatment, did not provide significantly improved sprout suppression as compared to the use of atmospheric air.

In Figure 8, the eye movement/sprouting data was measured at each sampling time point, and so represents the time to dormancy break.

### Comparative Example 2

In the Foukaraki et al paper discussed in Comparative Example 1, the results being illustrated in Figure 3 discussed above, potato tubers, of cultivar Saturna which had not been subjected to any CIPC treatment, were subjected to three different storage protocol treatments of (i) 1-MCP and late ethylene, and the 1-MCP was applied after pulldown to a storage temperature below 8°C; (ii) continuous ethylene and (iii) air.

In Foukaraki et al, sprout growth was measured at the end of the storage period of the experiments, after sprouts had developed. Therefore Example 7 of the present invention described above measured eye movement during the storage period, which represents the time to dormancy break, whereas in contrast Foukaraki et al measured sprout length at the end of the storage period.

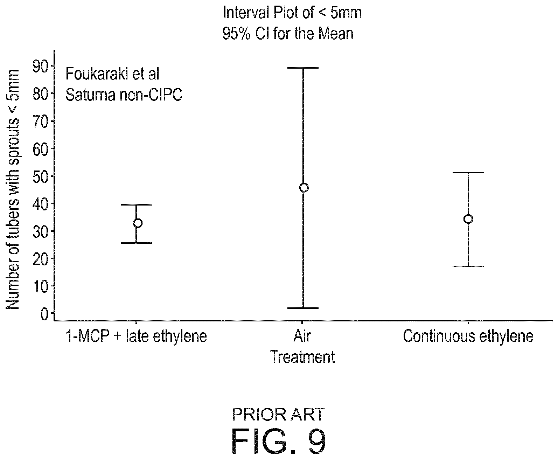

The results of the Foukaraki et al sprout growth measurements are shown in Figure 9. This data shows no significant difference between the three treatments, since the sprouts were measured at an advanced stage, after a storage period of 30 weeks, rather than throughout the storage period. The Foukaraki et al data shows that there is no added benefit on sprout suppression of combining a 1-MCP treatment, applied after temperature pulldown, and a subsequent ethylene treatment.

In contrast, the data of Example 7 shows that there is an added benefit on sprout suppression of combining a 1-MCP treatment, applied before any temperature pulldown, and a subsequent ethylene treatment.

Various modifications to the present invention will be readily apparent to those skilled in the art and are encompassed within the scope of the present invention as defined in the appended claims.

## Claims

1. A method of storing potatoes, the method comprising the steps of:
i. providing a plurality of dormant potatoes, wherein the potatoes have been cured after harvesting;
ii. in a first treatment step, treating the potatoes with 1-methylcyclopropene, the treatment comprising exposing the potatoes, which are at a first treatment temperature within the range of from 10 to 30°C, to 1-methylcyclopropene;
iii. storing the potatoes at a second storage temperature within the range of from 4 to 15°C; and
iv. in a subsequent second treatment step during the storing step iii, treating the potatoes with ethylene, the treatment comprising exposing the potatoes, which are at the second storage temperature, to ethylene.

2. A method according to any claim 1 wherein in storing step iii the potatoes are stored in atmospheric air at atmospheric pressure.

3. A method according to claim 1 or claim 2 wherein prior to the first treatment step ii, the cured dormant potatoes provided in step i have been maintained at a temperature of at least 10°C.

4. A method according to any preceding claim, wherein prior to the first treatment step ii, the cured dormant potatoes have not been subjected to a temperature pulldown to the second storage temperature.

5. A method according any preceding claim, wherein the first treatment step ii is carried out for a first treatment period of at least 12 hours, optionally from 12 to 36 hours, further optionally from 18 to 30 hours, yet further optionally about 24 hours.

6. A method according to any preceding claim, wherein during the first treatment step ii the potatoes are stored in a store having a store volume, and the 1-methylcyclopropene is applied at a concentration of from 0.5 to 5 µL/L, optionally from 0.5 to 2 µL/L, further optionally from 0.75 to 1.25 µL/L, yet further optionally about 1 µL/L, wherein the concentration in µL/L is the ratio of the volume of 1-methylcyclopropene to the store volume.

7. A method according to any preceding claim, wherein the first treatment temperature is within the range of from 12 to 25°C, optionally within the range of from 12 to 22°C.

8. A method according to any foregoing claim, wherein the second storage temperature is within the range of from 8 to 13°C.

9. A method according to any preceding claim, wherein in step i the potatoes are endodormant.

10. A method according to any preceding claim, wherein in the second treatment step iv the potatoes are treated continuously with ethylene so that, after initiation of the second treatment step iv, the potatoes are subsequently stored in an ethylene-containing atmosphere during the storing step iii.

11. A method according to any preceding claim, wherein during the storing step iii, and the second treatment step iv, the potatoes are stored in a store having a store volume, and the ethylene is applied at a concentration of from 5 to 20 µL/L, optionally from 5 to 15 µL/L, further optionally from 7.5 to 12.5 µL/L, yet further optionally about 10 µL/L, wherein the concentration in µL/L is the ratio of the volume of ethylene gas, measured under the pressure and temperature conditions of the storage step iii, to the store volume.

12. A method according to any preceding claim, wherein (a) the second treatment step iv is initiated after eye movement in at least one control potato stored in atmospheric air, optionally in from 1 to 10 %, by number of potatoes, of a plurality of control potatoes stored in atmospheric air, or (b) the second treatment step iv is initiated after eye movement in at least one of the potatoes, optionally after eye movement in from 1 to 10 % by number of the potatoes.

13. A method according to any preceding claim, wherein the second treatment step iv is initiated at least 4 weeks, optionally from 4 to 8 weeks, after the first treatment step ii.

14. A method according to any preceding claim, wherein, before the first treatment step ii, the potatoes have been cured after harvesting by storing the potatoes at a temperature range of from 10 to 20°C for a period of from 3 to 14 days, optionally at a relative humidity of from 90 to 95%, in atmospheric air at atmospheric pressure..

15. A method according to any foregoing claim wherein prior to the first treatment step ii the potatoes have not been pre-treated with a sprout suppressant.

16. A method according to any of claims 1 to 14, wherein prior to the first treatment step ii the potatoes are pre-treated with a chlorpropham (CIPC) sprout suppressant, optionally wherein the pre-treatment with the chlorpropham (CIPC) sprout suppressant comprises:
a. a first pretreatment step which exposes the potatoes to the chlorpropham (CIPC) sprout suppressant at a chlorpropham (CIPC) concentration of from 10 to less than 18 grams per tonne of potatoes after curing and within a period of less than 4 weeks from harvesting; and optionally
b. a second pretreatment step which exposes the potatoes to the chlorpropham (CIPC) sprout suppressant at a chlorpropham (CIPC) concentration of from 10 to less than 18 grams per tonne of potatoes within a period of from 2 to 8 weeks after the first pretreatment step,
further optionally (a) wherein in the first pretreatment step the chlorpropham (CIPC) concentration is from 12 to 15 grams per tonne of potatoes and in the optional second pretreatment step the chlorpropham (CIPC) concentration is from 12 to 15 grams per tonne of potatoes and/or (b) wherein the second pretreatment step is carried out from 3 to 5 weeks after the first pretreatment step.

## Patentansprüche

1. Verfahren zur Lagerung von Kartoffeln, wobei das Verfahren die Schritte aufweist:
i. Bereitstellen von mehreren ruhenden Kartoffeln, wobei die Kartoffeln nach der Ernte ausgehärtet wurden;
ii. in einem ersten Behandlungsschritt Behandeln der Kartoffeln mit 1-Methylcyclopropen, wobei die Behandlung ein Aussetzen der Kartoffeln, die sich bei einer ersten Behandlungstemperatur im Bereich von 10 bis 30°C befinden, gegenüber 1-Methylcyclopropen aufweist;
iii. Lagern der Kartoffeln bei einer zweiten Lagertemperatur im Bereich von 4 bis 15°C; und
iv. in einem anschließenden zweiten Behandlungsschritt während des Lagerungsschritts iii Behandeln der Kartoffeln mit Ethylen, wobei die Behandlung das Aussetzen der Kartoffeln, die sich bei der zweiten Lagerungstemperatur befinden, gegenüber Ethylen aufweist.

2. Verfahren nach Anspruch 1, wobei im Lagerungsschritt iii die Kartoffeln in atmosphärischer Luft bei atmosphärischem Druck gelagert werden.

3. Verfahren nach Anspruch 1 oder Anspruch 2, wobei vor dem ersten Behandlungsschritt ii die in Schritt i bereitgestellten gehärteten schlafenden Kartoffeln bei einer Temperatur von mindestens 10°C gehalten wurden.

4. Verfahren nach einem der vorhergehenden Ansprüche, wobei vor dem ersten Behandlungsschritt ii die gehärteten ruhenden Kartoffeln keinem Temperatur-Pulldown auf die zweite Lagertemperatur unterzogen wurden.

5. Verfahren nach einem der vorhergehenden Ansprüche, wobei der erste Behandlungsschritt ii für eine erste Behandlungsdauer von mindestens 12 Stunden, optional von 12 bis 36 Stunden, ferner optional von 18 bis 30 Stunden, noch ferner optional etwa 24 Stunden, durchgeführt wird.

6. Verfahren nach einem der vorhergehenden Ansprüche, wobei während des ersten Behandlungsschritts ii die Kartoffeln in einem Lager mit einem Lagervolumen gelagert werden und das 1-Methylcyclopropen in einer Konzentration von 0,5 bis 5 µL/l, optional von 0,5 bis 2 µL/l, ferner optional 0,75 bis 1,25 µL/L, noch ferner optional etwa 1 µL/L, angewendet wird, wobei die Konzentration in µL/L das Verhältnis des Volumens von 1-Methylcyclopropen zum Lagervolumen ist.

7. Verfahren nach einem der vorhergehenden Ansprüche, wobei die erste Behandlungstemperatur im Bereich von 12 bis 25°C ist, optional im Bereich von 12 bis 22°C .

8. Verfahren nach einem der vorhergehenden Ansprüche, wobei die zweite Lagertemperatur im Bereich von 8 bis 13°C ist.

9. Verfahren nach einem der vorhergehenden Ansprüche, wobei in Schritt i die Kartoffeln endormant sind.

10. Verfahren nach einem der vorhergehenden Ansprüche, wobei im zweiten Behandlungsschritt iv die Kartoffeln kontinuierlich mit Ethylen behandelt werden, sodass die Kartoffeln nach Beginn des zweiten Behandlungsschritts iv anschließend während des Lagerungsschritts iii in einer ethylenhaltigen Atmosphäre gelagert werden.

11. Verfahren nach einem der vorhergehenden Ansprüche, wobei während des Lagerungsschritts iii und des zweiten Behandlungsschritts iv die Kartoffeln in einem Lager mit einem Lagervolumen gelagert werden und das Ethylen in einer Konzentration von 5 bis 20 µL/L, optional von 5 bis 15 µL/L, ferner optional von 7,5 bis 12,5 µL/L, noch ferner optional etwa 10 µL/L, angewendet wird, wobei die Konzentration in µL/L das Verhältnis des Volumens des Ethylengases, gemessen unter den Druck- und Temperaturbedingungen des Lagerungsschritts iii, zum Lagervolumen ist.

12. Verfahren nach einem der vorhergehenden Ansprüche, wobei (a) der zweite Behandlungsschritt iv nach Augenbewegung in wenigstens einer in atmosphärischer Luft gelagerten Kontrollkartoffel, optional in von 1 bis 10%, bezogen auf die Anzahl von Kartoffeln, von mehreren von in atmosphärischer Luft gelagerten Kontrollkartoffeln eingeleitet wird, oder (b) der zweite Behandlungsschritt iv nach Augenbewegung in wenigstens einer der Kartoffeln, optional nach Augenbewegung in 1 bis 10 % der Anzahl der Kartoffeln, eingeleitet wird.

13. Verfahren nach einem der vorhergehenden Ansprüche, wobei der zweite Behandlungsschritt iv wenigstens 4 Wochen, optional 4 bis 8 Wochen, nach dem ersten Behandlungsschritt ii eingeleitet wird.

14. Verfahren nach einem der vorhergehenden Ansprüche, wobei vor dem ersten Behandlungsschritt ii die Kartoffeln nach dem Ernten durch Lagern der Kartoffeln in einem Temperaturbereich von 10 bis 20°C für einen Zeitraum von 3 bis 14 Tagen, optional bei einer relativen Luftfeuchtigkeit von 90 bis 95%, in atmosphärischer Luft bei Atmosphärendruck ausgehärtet wurden.

15. Verfahren nach einem der vorhergehenden Ansprüche, wobei vor dem ersten Behandlungsschritt ii die Kartoffeln nicht mit einem Keimunterdrückungsmittel vorbehandelt wurden.

16. Verfahren nach einem der Ansprüche 1 bis 14, wobei vor dem ersten Behandlungsschritt ii die Kartoffeln mit einem Chlorpropham (CIPC) - Keimunterdrückungsmittel vorbehandelt werden, wobei optional die Vorbehandlung mit dem Chlorpropham (CIPC) - Keimunterdrückungsmittel aufweist:
a. einen ersten Vorbehandlungsschritt, bei dem die Kartoffeln dem Chlorpropham (CIPC) - Keimunterdrückungsmittel bei einer Chlorpropham (CIPC) - Konzentration von 10 bis weniger als 18 Gramm pro Tonne Kartoffeln nach dem Reifen und innerhalb eines Zeitraums von weniger als 4 Wochen nach der Ernte ausgesetzt werden; und optional
b. einen zweiten Vorbehandlungsschritt, bei dem die Kartoffeln dem Chlorpropham (CIPC) - Keimunterdrückungsmittel bei einer Chlorpropham (CIPC) - Konzentration von 10 bis weniger als 18 Gramm pro Tonne Kartoffeln innerhalb eines Zeitraums von 2 bis 8 Wochen nach dem ersten Vorbehandlungsschritt ausgesetzt werden,
ferner optional (a) wobei im ersten Vorbehandlungsschritt die Chlorpropham (CIPC) - Konzentration 12 bis 15 Gramm pro Tonne Kartoffeln beträgt und im optionalen zweiten Vorbehandlungsschritt die Chlorpropham (CIPC) - Konzentration 12 bis 15 Gramm pro Tonne Kartoffeln beträgt und/oder (b) wobei der zweite Vorbehandlungsschritt 3 bis 5 Wochen nach dem ersten Vorbehandlungsschritt durchgeführt wird.

## Revendications

1. Procédé de stockage de pommes de terre, le procédé comprenant des étapes consistant à :
i. fournir une pluralité de pommes de terre en dormance, les pommes de terre ayant été séchées après la récolte ;
ii. à une première étape de traitement, traiter les pommes de terre au 1-méthylcyclopropène, le traitement consistant à exposer les pommes de terre, lesquelles sont à une première température de traitement comprise entre 10 et 30°C, au 1-méthylcyclopropène ;
iii. stocker les pommes de terre à une deuxième température de stockage comprise entre 4 et 15°C ; et
iv. à une deuxième étape de traitement ultérieure, lors de l'étape iii de stockage, traiter les pommes de terre à l'éthylène, ce traitement consistant à exposer les pommes de terre, lesquelles sont à la deuxième température de stockage, à l'éthylène.

2. Procédé selon la revendication 1, dans lequel, à l'étape iii de stockage, les pommes de terre sont stockées à l'air atmosphérique sous pression atmosphérique.

3. Procédé selon la revendication 1 ou 2, dans lequel, avant la première étape ii de traitement, les pommes de terre en dormance séchées, telles que fournies à l'étape i, ont été conservées à une température d'au moins 10°C.

4. Procédé selon l'une quelconque des revendications précédentes, dans lequel, avant la première étape ii de traitement, les pommes de terre en dormance séchées n'ont pas été soumises à un abaissement de température vers la deuxième température de stockage.

5. Procédé selon l'une quelconque des revendications précédentes, dans lequel la première étape ii de traitement est effectuée pendant une première période de traitement d'au moins 12 heures, éventuellement comprise entre 12 et 36 heures, en outre éventuellement comprise entre 18 et 30 heures, encore en outre éventuellement d'environ 24 heures.

6. Procédé selon l'une quelconque des revendications précédentes, dans lequel, lors de la première étape ii de traitement, les pommes de terre sont stockées dans un lieu de stockage ayant un volume de stockage, et le 1-méthylcyclopropène est appliqué à une concentration comprise entre 0,5 et 5µL/L, éventuellement comprise entre 0,5 et 2µL/L, en outre éventuellement comprise entre 0,75 et 1,25µL/L, encore en outre éventuellement égale à environ 1µ/L, dans lequel la concentration en µL/L est le rapport du volume de 1-méthylcyclopropène au volume de stockage.

7. Procédé selon l'une quelconque des revendications précédentes, dans lequel la première température de traitement est comprise entre 12 et 25°C, éventuellement comprise entre 12 et 22°C.

8. Procédé selon l'une quelconque des revendications précédentes, dans lequel la deuxième température de stockage est comprise entre 8 et 13°C.

9. Procédé selon l'une quelconque des revendications précédentes, dans lequel, à l'étape i, les pommes de terre sont endodormantes.

10. Procédé selon l'une quelconque des revendications précédentes, dans lequel, à la deuxième étape iv de traitement, les pommes de terre sont traitées continuellement à l'éthylène de sorte que, après le début de la deuxième étape iv de traitement, les pommes de terre sont par la suite stockées dans une atmosphère contenant de l'éthylène lors de l'étape iii de stockage.

11. Procédé selon l'une quelconque des revendications précédentes, dans lequel, lors de l'étape iii de stockage et la deuxième étape iv de traitement, les pommes de terre sont stockées dans un lieu de stockage ayant un volume de stockage et l'éthylène est appliqué à une concentration comprise entre 5 et 20µL/L, éventuellement comprise entre 5 et 15µL/L, en outre éventuellement comprise entre 7,5 et 12,5µL/L, encore en outre éventuellement égale à environ 10µL/L, dans lequel la concentration en µL/L est le rapport du volume de gaz d'éthylène, qui est mesuré sous les conditions de pression et de température de l'étape iii de stockage, au volume de stockage.

12. Procédé selon l'une quelconque des revendications précédentes, dans lequel (a) la deuxième étape iv de traitement débute après un mouvement d'oeil dans au moins une pomme de terre témoin stockée à l'air atmosphérique, éventuellement dans 1 à 10 %, en nombre de pommes de terre, d'une pluralité de pommes de terre témoins stockées à l'air atmosphérique, ou (b) la deuxième étape iv de traitement débute après un mouvement d'oeil dans au moins une des pommes de terre, éventuellement après un mouvement d'oeil dans 1 à 10 % en nombre de pommes de terre.

13. Procédé selon l'une quelconque des revendications précédentes, dans lequel la deuxième étape iv de traitement débute au moins 4 semaines, éventuellement de 4 à 8 semaines, après la première étape ii de traitement.

14. Procédé selon l'une quelconque des revendications précédentes, dans lequel, avant la première étape de traitement ii, les pommes de terre ont été séchées après la récolte en stockant les pommes de terre à une température comprise entre 10 et 20°C pendant une période de 3 à 14 j ours, éventuellement à une humidité relative de 90 à 95%, à l'air atmosphérique sous pression atmosphérique.

15. Procédé selon l'une quelconque des revendications précédentes, dans lequel, avant la première étape ii de traitement, les pommes de terre n'ont pas été prétraitées avec un antigerminatif.

16. Procédé selon l'une quelconque des revendications 1 à 14, dans lequel, avant la première étape ii de traitement, les pommes de terre sont prétraitées avec un antigerminatif au chlorprophame (CIPC), éventuellement dans lequel le prétraitement avec l'antigerminatif au chlorprophame (CIPC) comprend :
a. une première étape de prétraitement qui expose les pommes de terre à l'antigerminatif au chlorprophame (CIPC) à une concentration de chlorprophame (CIPC) comprise entre 10 et moins de 18 grammes par tonne de pommes de terre après séchage et dans une période inférieure à 4 semaines à compter de la récolte ;
et éventuellement
b. une deuxième étape de prétraitement qui expose les pommes de terre à l'antigerminatif au chlorprophame (CIPC) à une concentration de chlorprophame (CIPC) comprise entre 10 et moins de 18 grammes par tonne de pommes de terre dans une période de 2 à 8 semaines après la première étape de prétraitement,
en outre éventuellement : (a) dans lequel, à la première étape de prétraitement, la concentration en chlorprophame (CIPC) est comprise entre 12 et 15 grammes par tonne de pommes de terre, et à la deuxième étape de prétraitement facultative, la concentration en chlorprophame (CIPC) est comprise entre 12 et 15 grammes par tonne de pommes de terre ; et/ou (b) dans lequel la deuxième étape de prétraitement est réalisée 3 à 5 semaines après la première étape de prétraitement.
